# EUROPEAN PATENT APPLICATION

(11) **EP 2 869 472 A1**
(43) Date of publication of application: **06.05.2015**
(21) Application number: 13809910.6
(22) Date of filing: 18.03.2013
(51) Int. Cl.: H04B 1/38

(54) **MOBILE TERMINAL FOR AUTOMATICALLY ADJUSTING ANTENNA MATCHING, AND CONTROL METHOD THEREFOR**

(30) Priority: 28.06.2012 CN 201210217625
(71) Applicant: Huizhou TCL Mobile Communication Co., Ltd., Huizhou, Guangdong 516006 (CN)
(72) Inventor: JIN, Xin, Huizhou Guangdong 5160066 (CN)
(74) Representative: Brachmann, Roland W.
(86) International application number: PCT/CN2013/072792
(87) International publication number: WO 2014/000471

(57) **Abstract**

Disclosed are a mobile terminal for automatically adjusting antenna matching, and a control method thereof. By judging whether an RSSI value is smaller than a preset value, the mobile terminal and the control method thereof send an SPI control signal according to the judgment result, and an SPI control interface transmits same to an antenna matching module to control the magnitude of variable capacitance and variable inductance, thereby adjusting antenna matching impedance to increase the RSSI value. The mobile terminal and the control method thereof of the present invention have a good communication signal and high call quality.

## Description

### FIELD OF THE INVENTION

The present invention relates to the field of communication technology, and in particular to a mobile terminal for automatically adjusting antenna matching and a control method thereof.

### BACKGROUND OF THE INVENTION

Currently, RSSI (Received Signal Strength Indication, received signal strength indication) is frequently used in cell phone communications to judge link quality and represent the strength of a communication signal. Generally the signal is good when the RSSI is set as 90dbm around; if the RSSI value is smaller than 70dbm, such phenomena as offline, crosstalk, poor quality of speech, poor networking quality, and the like may appear during communications. The RSSI value is related to such factors as wireless environment, signal strength, speech frequency and antenna matching and the like. In cell phone design, the receiving capacity of an antenna is usually matched to an optimum behavior by adjusting the matched impedance of an antenna matching circuit, thus improving the RSSI value. The existing antenna matching circuit is a π type matching circuit inside which values of the capacitance and the inductance values are fixed. By changing the grounding or parallel conditions of the capacitance and the inductance, such as increasing series inductance as illustrated in the matched impedance schematic view of the smith chart in the prior art, the final matched impedance falls in the surrounding of the circle center of the smith chart (smith chart); the closer to the circle center, the better the matching is, and the higher the efficiency of the antenna is, so that the RSSI value is higher, and vice versa.

With the development of communication technologies, the frequency bands included in the cell phone are also gradually increased; for example, a smartphone regularly has 5 and 6 frequency bands. The more the included frequency bands are, the more the base station signals can be selected, which not only may enlarge the call completion rate of the cell phone, keep the talk uninterrupted, but also can obtain excellent speech quality and communication coverage. But at the same time, the increasing of the frequency bands raises a higher requirement on the design of the antenna, and particularly on the antenna matching. When the cell phone is designed with one frequency band only, an optimal antenna matching circuit may be matched, which is easier to match proper impedance. However, when the cell phone has 5 frequency bands at the same time, usually the cell phone is designed to search a balance point in the 5 frequency bands so as to meet the matching requirements of all the frequency bands. The matched impedance obtained in this manner has low adaptability with each frequency band, and the receiving capacity of the antenna cannot be adjusted flexibly with the change of the frequency band. Particularly, when seizing the frequency band in a region having more cell phones, or when the signal penetrating power is not strong in a place with intensive buildings, the RSSI signal of the cell phone may be reduced due to the environmental influence usually, thus decreasing the speech quality.

Therefore, the prior art still needs to be developed and improved.

### SUMMARY OF THE INVENTION

In view of the defects of the prior art, the present invention aims at providing a mobile terminal for automatically adjusting antenna matching and a control method thereof, so as to solve the problems that the antenna matching circuit of the prior art cannot adjust the antenna matching impedance randomly to meet the multi-frequency band matching requirement when a talking frequency band is changed, and has poor speech quality.

In order to achieve the foregoing objectives, the present invention adopts the following technical solutions.

The present invention provides a mobile terminal for automatically adjusting antenna matching, comprising:
- a baseband processing module, used for monitoring and judging an RSSI value, outputting an SPI control signal, and calculating the RSSI value according to antenna matching impedance;
- a SPI control interface, used for transmitting the SPI control signal sent out by the baseband processing module to the antenna matching module under an RSSI adjusting mode;
- a radio frequency transmitting-receiving module, used for modulating and demodulating signals processed by the baseband processing module and a radio frequency front end module;
- the radio frequency front end module, used for filtering and function amplification on signals processed by the radio frequency transmitting-receiving module and the antenna matching module;
- the antenna matching module, used for adjusting the value of the antenna matching impedance; and
- an antenna, used for irradiating and receiving wireless signals.
- One end of the baseband processing module is connected to one end of the antenna matching module through the SPI control interface; the other end of the baseband processing module is connected to the other end of the antenna matching module through the radio frequency transmitting-receiving module and the radio frequency front end module in sequence; and the antenna matching module is also connected to the antenna.

The present invention provides a control method for automatically adjusting antenna matching of the foregoing mobile terminal, comprising:
A, starting an RSSI monitoring mode of a mobile terminal during startup;
B, monitoring, by a baseband processing module, an RSSI value in real time, and judging whether the RSSI value is smaller than a preset frequency band; if yes, entering, by the mobile terminal, in an RSSI adjusting mode and performing step C; otherwise, continuously monitoring the RSSI value;
C, transmitting, by the baseband processing module, an SPI control signal to an antenna matching module through an SPI control interface, and adjusting, by the antenna matching module, the value of antenna matching impedance according to the SPI control signal, specifically comprising:
   - transmitting, by the baseband processing module, the SPI control signal to the antenna matching module through the SPI control interface;
   - controlling, by the SPI control signal, the magnitude of variable capacitance and variable inductance inside the antenna matching module; and
   - generating, by the antenna matching module, matched impedance according to the adjusted variable capacitance and/or variable inductance;
D, calculating, by the baseband processing module, the RSSI value according to the matched inductance of the antenna matching module, and judging whether the adjusted RSSI value is smaller than a preset frequency band; if yes, performing step C; otherwise, finishing the adjustment, and quitting the RSSI adjusting mode.

The present invention further provides another control method for automatically adjusting antenna matching of the foregoing mobile terminal, comprising:
A, starting an RSSI monitoring mode of a mobile terminal during startup;
B, monitoring, by a baseband processing module, an RSSI value in real time, and judging whether the RSSI value is smaller than a preset frequency band; if yes, entering, by the mobile terminal, in an RSSI adjusting mode and performing step C; otherwise, continuously monitoring the RSSI value;
C, transmitting, by the baseband processing module, an SPI control signal to an antenna matching module through an SPI control interface, and adjusting, by the antenna matching module, the value of antenna matching impedance according to the SPI control signal; and
D, judging, by the baseband processing module, whether the adjusted RSSI value is smaller than a preset frequency band; if yes, performing step C; otherwise, finishing the adjusting, and quitting the RSSI adjusting mode.

Compared with the prior art, the mobile terminal for automatically adjusting antenna matching and the control method thereof provided by the present invention monitor the RSSI value through the baseband processing module; when judging the RSSI value is smaller than the preset value, the mobile terminal and the control method thereof send the SPI control signal, and the SPI control interface transmits same to the antenna matching module; afterwards, the antenna matching module controls the magnitude of variable capacitance and variable inductance inside the antenna matching module according to the received SPI control signal, thereby changing the value of the antenna matching impedance, increasing the RSSI value, obtaining a better communication signal, and ensuring excellent speech quality.

### BRIEF DESCRIPTION OF DRAWINGS

In order to illustrate the technical solutions in the embodiments of the present invention more clearly, the accompanying drawings used in the descriptions of the embodiments will be described simply. Apparently, the accompanying drawings described hereinafter are merely some embodiments of the present invention. Those having ordinary skills in the art may also figure out other accompanying drawings according to the accompanying drawings without going through any creative work.

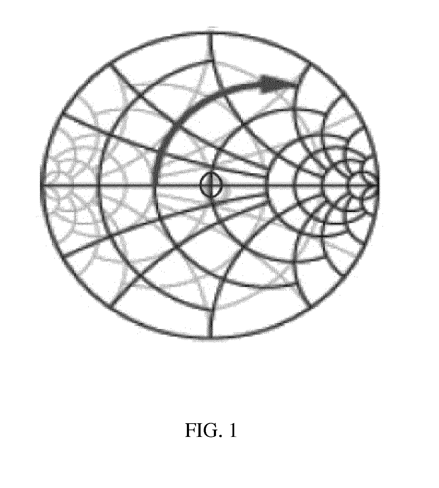

- FIG.1: is a matched impedance schematic view of a smith chart in the prior art.
- FIG.2: is a structure block diagram of a mobile terminal for automatically adjusting antenna matching according to the present invention.
- FIG.3: is a structure schematic view of an example antenna matching module of the mobile terminal according to the present invention.
- FIG.4: is a flow chart of a control method for automatically adjusting antenna matching according to the present invention.
- FIG.5: is an impedance schematic view when closing a cover of a flip phone in the prior art.
- FIG.6: is an impedance schematic view when opening the cover of the flip phone in the prior art.

### DETAILED DESCRIPTION OF THE EMBODIMENTS

The present invention provides a mobile terminal for automatically adjusting antenna matching and a control method thereof. To make the objectives, technical solution and effects of the present invention more clearly, the present invention is further described in details with reference to the drawings and example embodiments. It should be understood that the specific embodiments described here are merely used for explaining the present invention, but are not intended to limit the present invention.

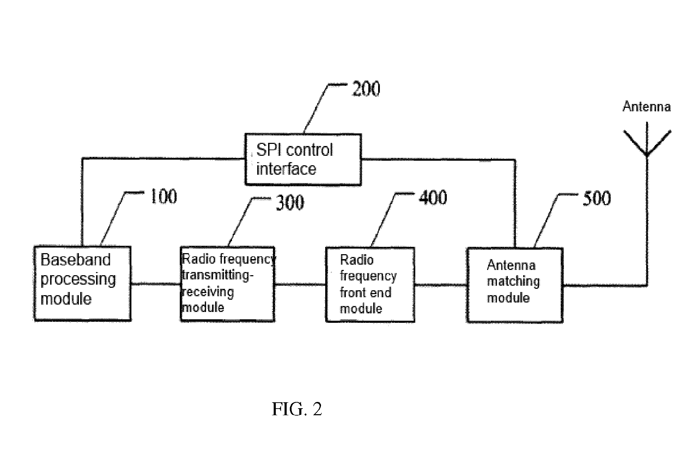

FIG.2 is a structure block diagram of the mobile terminal for automatically adjusting antenna matching according to the present invention. As shown in FIG.2, the mobile terminal for automatically adjusting antenna matching comprises a baseband processing module 100, an SPI control interface 200, a radio frequency transmitting-receiving module 300, a radio frequency front end module 400, an antenna matching module 500 and an antenna.

The baseband processing module 100 is used for monitoring and judging an RSSI value, outputting an SPI control signal, and calculating the RSSI value according to antenna matching impedance. Other functions of the baseband processing module 100 such as signal encoding/decoding and the like are the prior art, and will not be repeatedly described any further in the present invention.

The SPI control interface 200 is used for transmitting the SPI control signal sent out by the baseband processing module 100 to the antenna matching module 500 under an RSSI adjusting mode. The radio frequency transmitting-receiving module 300 is used for modulating and demodulating signals processed by the baseband processing module and a radio frequency front end module. The radio frequency front end module 400 is used for performing filtering and power amplification on signals processed by the radio frequency transmitting-receiving module and the antenna matching module. The antenna matching module 500 is used for adjusting the magnitude of variable capacitance and/or variable inductance to change the value of the antenna matching impedance. The antenna is used for irradiating and receiving a wireless signal.

The radio frequency transmitting-receiving module 300 performs down-conversion on the signal transmitted by the baseband processing module 100 to reduce the signal frequency, and performs up-conversion on the signal transmitted by the radio frequency front end module 400 to improve the signal frequency.

One end of the baseband processing module 100 is connected to one end of the antenna matching module 500 through the SPI control interface 200. The other end of the baseband processing module 100 is connected to the other end of the antenna matching module 500 through the radio frequency transmitting-receiving module 300 and the radio frequency front end module 400 in sequence. The antenna matching module 500 is also connected to the antenna.

An element in the antenna matching module 500 may be variable capacitance and/or variable inductance. The mobile terminal is a cell phone, a tablet computer or a data card.

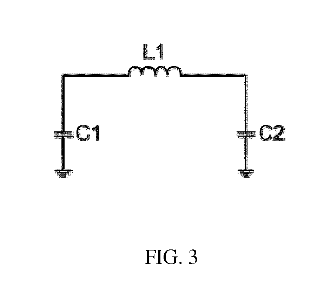

Please refer to FIG.3 at the same time. FIG.3 is a structure schematic view of an example antenna matching module of the mobile terminal according to the present invention. The mobile terminal comprises first capacitance C1, second capacitance C2 and first inductance L1. One end of the first capacitance C1 is connected to one end of the second capacitance C2 through the first inductance L1. Both the other end of the first capacitance C1 and the other end of the second capacitance C2 are grounded. The first capacitance C1 and the second capacitance C2 are variable capacitance. The first inductance L1 is variable inductance.

The first capacitance C1, the second capacitance C2 and the first inductance L1 form a π type matching circuit. In the π type matching circuit, the electronic elements adopted may be all variable capacitances or all variable inductances or a combination of two variable inductances and one variable capacitance, or a combination of two variable capacitances and one variable inductance. It is understandable that the electronic elements in the antenna matching module may not only be combined into a matching circuit of π type, but may also be combined into an antenna matching circuit of other forms, which will not be defined in the present invention.

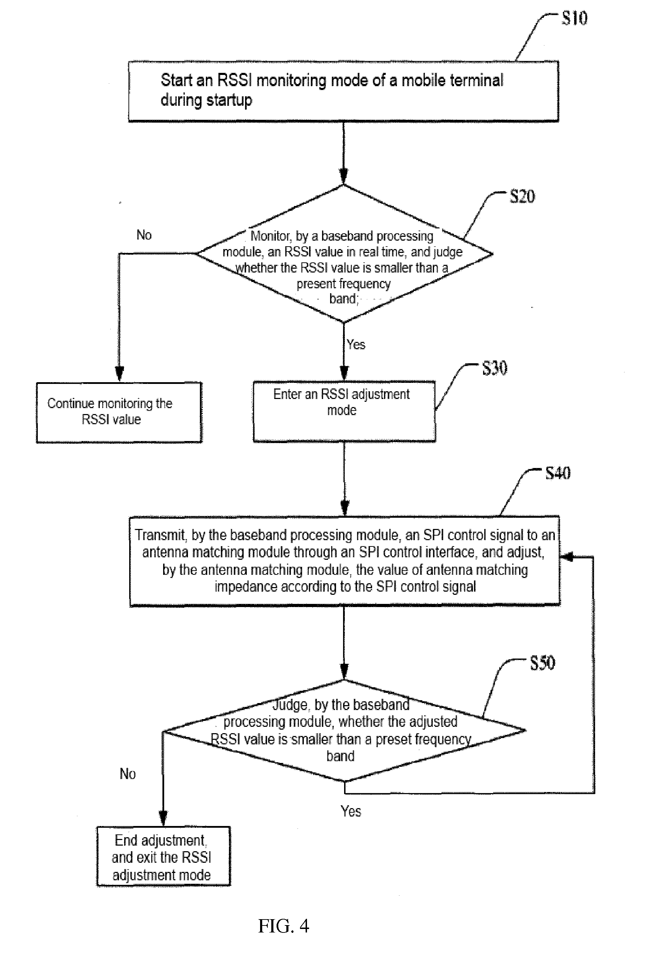

Referring to FIG.4, the control method provided by the present invention comprises the following steps of:
S10, starting an RSSI monitoring mode of a mobile terminal during startup, wherein the mobile terminal may automatically start the RSSI monitoring mode while startup.
S20, monitoring, by a baseband processing module, an RSSI value in real time, and judging whether the RSSI value is smaller than a preset frequency band; if yes, performing step S30; otherwise, continuously monitoring the RSSI value.

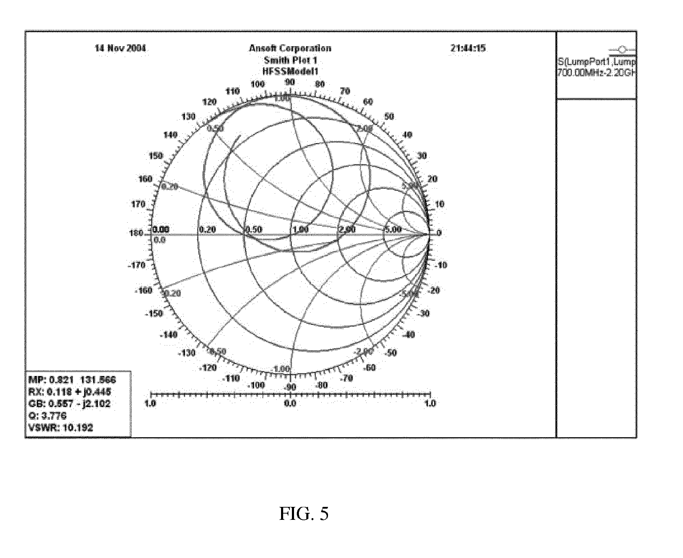

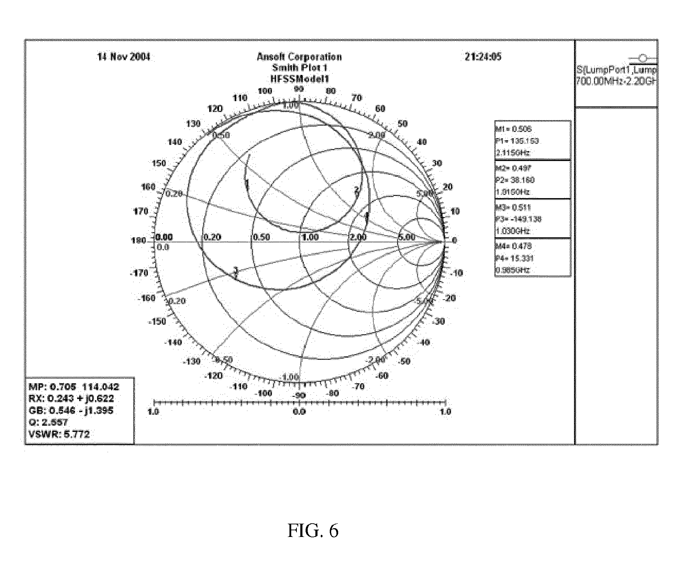

In the embodiment, the preset frequency band is 70dbm. Generally the signal is good when the RSSI is 90dbm around; if the RSSI value is smaller than 70dbm, the speech quality may be influenced. The RSSI value may be changed with the changing of such factors as wireless environment, location signal strength, speech frequency and antenna matching and the like. Particularly, FIG.5 and FIG.6 are respectively an impedance schematic view when closing a cover of a flip phone in the prior art and an impedance schematic view when opening the cover of the flip phone in the prior art. The flip phone has different impedances when opening and closing the cover, thus causing different antenna matching, and thereby influencing the change of the RSSI value.

S30, entering the RSSI adjusting mode.

S40, transmitting, by the baseband processing module, an SPI control signal to an antenna matching module through an SPI control interface, and adjusting, by the antenna matching module, the value of antenna matching impedance according to the SPI control signal.

An SPI (Serial Peripheral Interface, serial peripheral interface) control interface transmits a serial data control command according to a specific transport protocol thereof, to realize data communications between the baseband processing module and the antenna matching module. That is, the SPI control signal is a digital signal, which may be a binary code such as 010111. The SPI control signals sent each time are different, and the specific data is controlled by the baseband processing module.

In the embodiment, the antenna matching module adopts a matching circuit combined by a variable capacitance circuit and/or variable inductance, which can be referred to in FIG.3. The magnitude of the variable capacitance and/or the variable inductance is adjusted according to the binary code sent by the SPI control signal, thus obtaining matched impedance.

S50, judging, by the baseband processing module, whether the adjusted RSSI value is smaller than a preset frequency band; if yes, performing step S40; otherwise, finishing the adjusting, and quitting the RSSI adjusting mode.

Generally when the matched impedance is 50 ohm, the efficiency of the antennary is optimum and the communication signal is best. The baseband processing module compares the magnitude of the calculated matched impedance with 50 ohm. The closer to the 50 ohm, the higher the RSSI value is; and the further from the 50 ohm, the lower the RSSI value is.

If the RSSI value can reach 70dbm above after the first adjustment, the adjustment is finished, the RSSI adjusting mode is quitted and the RSSI monitoring mode is returned. If the RSSI value after the first adjustment is still smaller than 70dbm, the baseband processing module sends an SPI control signal again to adjust the magnitude of the matched impedance.

To sum up, the present invention monitors the RSSI value in real time through the baseband processing module. When the RSSI value is reduced and smaller than the preset frequency band due to the change of the talking frequency band or other conditions, the baseband processing module sends an SPI control signal and an SPI control interface transmits same to an antenna matching module to control the magnitude of variable capacitance and/or variable inductance, thereby adjusting antenna matching impedance to increase the RSSI value, adapt to a new talking frequency band, enhance the talking signals, and ensure excellent talking environments.

The foregoing descriptions are merely embodiments of the present invention, but do not thus limit the protection scope of the present invention. Any equivalence structure or equivalence flow transformation figured out by utilizing the specification and the accompanying drawings of the present invention or directly or indirectly applied to other related technical fields shall all similarly fall within the protection scope of the present invention.

## Claims

1. A mobile terminal for automatically adjusting antenna matching, comprising:
- a baseband processing module, used for monitoring and judging an RSSI value, outputting an SPI control signal, and calculating the RSSI value according to antenna matching impedance;
- a SPI control interface, used for transmitting the SPI control signal sent out by the baseband processing module to an antenna matching module under an RSSI adjusting mode;
- a radio frequency transmitting-receiving module, used for modulating and demodulating signals processed by the baseband processing module and a radio frequency front end module;
- the radio frequency front end module, used for performing filtering and power amplification on signals processed by the radio frequency transmitting-receiving module and the antenna matching module;
- the antenna matching module, used for adjusting the value of the antenna matching impedance; and
- an antenna, used for irradiating and receiving a wireless signal;
- one end of the baseband processing module is connected to one end of the antenna matching module through the SPI control interface; the other end of the baseband processing module is connected to the other end of the antenna matching module through the radio frequency transmitting-receiving module and the radio frequency front end module in sequence; and the antenna matching module is also connected to the antenna.

2. The mobile terminal according to claim 1, wherein the elements in the antenna matching module is variable in capacitance and/or inductance.

3. The mobile terminal according to claim 1, wherein the mobile terminal is a cell phone, a tablet computer or a data card.

4. A control method for automatically adjusting antenna matching adopting the mobile terminal according to claim 1, comprising:
A, starting an RSSI monitoring mode of a mobile terminal during startup;
B, monitoring, by a baseband processing module, an RSSI value in real time, and judging whether the RSSI value is smaller than a preset frequency band; if yes, entering, by the mobile terminal, in an RSSI adjusting mode and performing step C; otherwise, continuously monitoring the RSSI value;
C, transmitting, by the baseband processing module, an SPI control signal to an antenna matching module through an SPI control interface, and adjusting, by the antenna matching module, the value of antenna matching impedance according to the SPI control signal, specifically comprising:
- transmitting, by the baseband processing module, the SPI control signal to the antenna matching module through the SPI control interface;
- controlling, by the SPI control signal, the magnitude of variable capacitance and variable inductance inside the antenna matching module; and
- generating, by the antenna matching module, matched impedance according to the adjusted variable capacitance and/or variable inductance;
D, calculating, by the baseband processing module, the RSSI value according to the matched inductance of the antenna matching module, and judging whether the adjusted RSSI value is smaller than a preset frequency band; if yes, performing step C; otherwise, finishing the adjusting, and quitting the RSSI adjusting mode.

5. The control method for automatically adjusting antenna matching according to claim 4, wherein the SPI control signal is a digital signal.

6. The control method for automatically adjusting antenna matching according to claim 4, wherein the preset frequency band is 70dbm.

7. A control method for automatically adjusting antenna matching adopting the mobile terminal according to claim 1, comprising:
A, starting an RSSI monitoring mode of a mobile terminal during startup;
B, monitoring, by a baseband processing module, an RSSI value in real time, and judging whether the RSSI value is smaller than a preset frequency band; if yes, entering, by the mobile terminal, in an RSSI adjusting mode and performing step C; otherwise, continuously monitoring the RSSI value;
C, transmitting, by the baseband processing module, an SPI control signal to an antenna matching module through an SPI control interface, and adjusting, by the antenna matching module, the value of antenna matching impedance according to the SPI control signal; and
D, judging, by the baseband processing module, whether the adjusted RSSI value is smaller than a preset frequency band; if yes, performing step C; otherwise, finishing the adjusting, and quitting the RSSI adjusting mode.

8. The control method for automatically adjusting antenna matching according to claim 7, wherein the step C specifically comprises the steps of:
C1, transmitting, by the baseband processing module, the SPI control signal to the antenna matching module through the SPI control interface;
C2, controlling, by the SPI control signal, the magnitude of variable capacitance and variable inductance inside the antenna matching module; and
C3, generating, by the antenna matching module, matched impedance according to the adjusted variable capacitance and/or variable inductance.

9. The control method for automatically adjusting antenna matching according to claim 7, wherein the step D further comprises the step of:
D1, calculating, by the baseband processing module, the RSSI value according to the magnitude of the matched impedance of the antenna matching module.

10. The control method for automatically adjusting antenna matching according to claim 7, wherein the SPI control signal is a digital signal.

11. The control method for automatically adjusting antenna matching according to claim 7, wherein the preset frequency band is 70dbm.
